# EUROPEAN PATENT SPECIFICATION

(11) **EP 2 811 462 B1**
(45) Date of publication and mention of the grant of the patent: **15.11.2017**
(21) Application number: 14171652.2
(22) Date of filing: 09.06.2014
(51) Int. Cl.: G06T 19/00, G06T 11/60

(54) **Method and device for providing information in view mode**
Verfahren und Vorrichtung zur Bereitstellung von Informationen im Ansichtsmodus
Procédé et dispositif pour fournir des informations en mode de visualisation

(30) Priority: 07.06.2013 KR 20130065089
(43) Date of publication of application: 10.12.2014
(73) Proprietor: Samsung Electronics Co., Ltd., Gyeonggi-do 443-742 (KR)
(72) Inventor: Kim, Kyunghwa, 443-742 Gyeonggi-do (KR)
(74) Representative: HGF Limited

(56) References cited:
- EP-A1- 2 393 056
- EP-A1- 2 418 623
- EP-A2- 2 420 955
- EP-A2- 2 420 978

## Description

### BACKGROUND OF THE INVENTION

### 1. Field of the Invention

The present invention generally relates to a method and a device for providing information in a view mode, and more particularly, to a method and a device for providing information in a view mode which can map and display various sets of information on an image or a background of a real world input through a camera module.

### 2. Description of the Related Art

Recently, with the development of digital technologies, various electronic devices (e.g., a mobile communication terminal, a Personal Digital Assistant (PDA), an electronic organizer, a smart phone, a tablet Personal Computer (PC), and the like) which can perform communication and personal information processing have come to market. Such electronic devices have reached a mobile convergence stage of encompassing an area of other electronic devices without being confined to their own traditional unique areas. For example, a portable terminal may be provided with various functions including a call function such as a voice call and a video call, a message transmission/reception function such as a Short Message Service (SMS), a Multimedia Message Service (MMS), and an e-mail function, a navigation function, a word processing function (e.g., a memo function, and an office function), a photographing function, a broadcast reproduction function, a media (video and music) reproduction function, an Internet function, a messenger function, a Social Networking Service (SNS) function, and the like.

As technologies associated with the electronic device have developed, service areas that can be provided have also increased and, thus, various service systems providing various pieces of information for users have also been developed. As one of the services, a service for providing more realistic information by overlapping additional information on an actual screen (the background of the real world) obtained through a camera module using an Augmented Reality (AR) technology has been recently increased.

The augmented reality technology was derived from the virtual reality technology, and refers to a technology capable of improving recognition of the real world through overlapping and displaying additional information on an actual screen obtained through the camera module. Namely, the augmented reality technology is a field of virtual reality and corresponds to a computer graphic technique of combining a virtual object or virtual information with an actual environment. Unlike the virtual reality targeting only a virtual space and a virtual object, the augmented reality technology can add additional information which is difficult to obtain through the real world alone, by overlaying the virtual object or information on the backdrop of the actual environment.

Such an augmented reality technology may provide a function of selecting the virtual object or information to be composed by applying a filter to all objects belonging to the actual environment. However, according to the related art, the same filter is applied to all the objects and a specific filter may not be applied for each of the objects. Accordingly, the conventional electronic device supporting the augmented reality function identically displays all information according to a filter provided by a corresponding augmented reality application or a service provider of the augmented reality and displays several pieces of information at one time, and, thus, cannot separately display only information in which a user is interested.

EP2420978 A2 discloses an apparatus for providing attribute information about an object being displayed on an augmented reality screen.

### SUMMARY OF THE INVENTION

The present invention has been made to address at least the above problems and disadvantages and to provide at least the advantages described below. Accordingly, an example is to provide a method and a device for providing information in a view mode, which can discriminatively apply and display virtual information for a reality image input through a camera module in a view mode in real time.

Another example is to provide a method and a device for providing information in a view mode which can discriminatively display information according to an importance value or a priority for each of the objects in a reality image when the information corresponding to a real world input through a camera module in real time is mapped and displayed.

Another example is to provide a method and a device for providing information in a view mode which can process a reality image acquired through a camera module at the same level, or can process the reality image at different levels according to an importance value (or a priority) for each of the objects in the reality image to discriminatively apply and display virtual information for the reality image when the virtual information is displayed on the reality image according to augmented reality in an electronic device.

Another example is to provide a method and a device for providing information in a view mode, which can change and display a range of information (or an amount of information) according to the number of objects in a reality image when the reality image is processed at the same level.

Another example is to provide a method and a device for providing information in a view mode, which can change and display a range of information (or an amount of information) for each of objects according to an importance value (or a priority) of the objects in a reality image when the reality image is processed at different levels.

Another example is to provide a method and a device for providing information in a view mode in which, when virtual information is mapped and displayed on a reality image according to augmented reality in an electronic device, a sense of distance and a sense of direction is more intuitively recognized according to an importance value (or a priority) so that mapping information for each of objects in the reality image can be easily and conveniently identified.

Another example is to provide a method and a device for providing information in a view mode, which can improve user convenience and usability of an electronic device by implementing an optimal environment for displaying virtual information using augmented reality in the electronic device.

In accordance with an aspect of the present invention, a method according to claim 1 is provided. In accordance with another aspect of the present invention, an electronic device according to claim 8 is provided. In accordance with an example, an electronic device includes a computer-implemented reality image display module for displaying a reality image acquired in a view mode; a computer-implemented information processing module for determining a display range of virtual information for each of the objects depending on an importance value of the objects according to the reality image; and a computer-implemented information display module for mapping and displaying the virtual information for each of the objects on the object.

In accordance with an aspect of the present invention, a computer readable recording medium according to claim 9 is provided.

### BRIEF DESCRIPTION OF THE DRAWINGS

The above and other aspects, features and advantages of the present invention will be more apparent from the following detailed description in conjunction with the accompanying drawings, in which:
FIG. 1 is a block diagram schematically illustrating a configuration of an electronic device according to an embodiment of the present invention;
FIG. 2 is a flowchart illustrating a method of providing virtual information in an electronic device according to an embodiment of the present invention;
FIGS. 3A-3C and 4A-4B illustrate examples of an operation in which objects of a reality image are processed at the same level in an electronic device according to an embodiment of the present invention;
FIGS. 5 and 6 illustrate examples of an operation in which objects of a reality image are processed at different levels in an electronic device according to an embodiment of the present invention;
FIG. 7 illustrates an example of an operation in which objects of a reality image are processed at different levels in an electronic device according to an embodiment of the present invention; and
FIG. 8 is a flowchart illustrating a method of mapping and displaying virtual information on a reality image in an electronic device according to an embodiment of the present invention.

### DETAILED DESCRIPTION OF EMBODIMENTS OF THE PRESENT INVENTION

Hereinafter, various embodiments of the present invention will be described in detail with reference to the accompanying drawings. It should be noted that the same elements will be designated by the same reference numerals although they are shown in different drawings. Further, a detailed description of well-known functions and configurations incorporated herein will be omitted when it makes the subject matter of the present invention unclear. It should be noted that only portions required for comprehension of operations according to the various embodiments of the present invention will be described and descriptions of other portions will be omitted so as not to obscure the subject matter of the present invention.

The present invention relates to a method and a device for providing information in a view mode, and more particularly, to a method and a device for providing information in a view mode using augmented reality capable of displaying virtual information together with a reality image input through a camera module in real time. The various embodiments of the present invention relate to mapping and displaying various pieces of virtual information on a reality image of a real world when the reality image (e.g., an image or a background) of the real world using Augmented Reality (AR) is displayed in the view mode. According to the various embodiments of the present invention, the view mode may include an augmented reality view mode provided for each of the augmented reality applications or a preview mode for providing a reality image as a preview when the camera module is turned on.

According to the embodiments of the present invention, when a reality image acquired through a camera module is displayed in the view mode, the virtual information may be discriminatively displayed in correspondence to the displayed reality image. When the virtual information is mapped and displayed on the reality image in the view mode, the virtual information may be discriminatively applied and displayed according to the number of objects in the reality image or an importance value (or a priority) for each of the objects in the reality image.

For example, an electronic device according to an embodiment of the present invention may discriminatively display the virtual information by changing a display range of the virtual information (or an amount of the information) according to the number of objects in the reality image when mapping and displaying the virtual information on the reality image according to the augmented reality in the view mode. Further, the electronic device may discriminatively display the virtual information by changing a display range of the virtual information (or an amount of the information) for each of the objects according to an importance value (or a priority) of the objects in the reality image when mapping and displaying the virtual information on the reality image according to the augmented reality in the view mode.

In the various embodiments of the present invention, the importance value of the objects may be determined by at least one of requisites such as the number of objects, the size of the objects, the distance between an electronic device and objects, time when objects are provided, and time when objects are displayed. Further, the importance value of the objects may be diversely set and changed according to a user's setting. According to an embodiment, a user may determine an importance value according to the number of objects or according to combinations of the number of objects and the distance between the electronic devices and the objects. Namely, the importance value of the objects may be determined by any one of the aforementioned requisites or an arbitrary combination of at least two of the aforementioned requisites. When the importance value of the objects is arbitrarily changed and set by a user, the virtual information may also be changed and displayed according to the changed importance value of the objects.

In the various embodiments of the present invention, "augmented reality" refers to a technology for overlapping virtual information with a reality image and showing them to a user in an actual environment. For example, virtual information is overlapped and displayed on a reality image which is acquired through the camera module of the electronic device and displayed as a preview, and thus, a user recognizes virtual information as a part of the real world.

In the various embodiments of the present invention, the reality image displayed as a preview through a view mode may include a background of a real world having such a type of object as a person, a building, an animal, or an object (e.g., a vehicle, a bicycle, a sculpture, a statue, and the like) or an image related to an intangible spot based on a position information service (e.g., map data).

In the various embodiments of the present invention, virtual information may include text information or image information, which is related to a person, a building, an animal, an object, or a map. For example, the virtual information may include various pieces of information such as contact information, attraction spot information based on augmented reality (e.g., hotel information, building information, restaurant review information, and the like), Social Networking Service (SNS) information, and Really Simple Syndication or Rich Site Summary (RSS) feed information. The virtual information may be granted an importance value (or a priority) according to a user's setting.

The foregoing has outlined rather broadly features and technical advantages of the present invention in order that those skilled in the related art may better understand detailed descriptions of various embodiments of the present invention which will be described below. In addition to the aforementioned features, additional features which form the subject of claims of the present invention will be better understood from the detailed descriptions of the present invention which will be described below.

As described above, according to the method and the device for providing information in the view mode of the present invention, virtual information can be mapped and displayed on a reality image of a real world input through a camera module in the view mode in real time. When the virtual information is mapped and displayed on the reality image in the view mode, the mapped virtual information can be discriminatively displayed according to objects configuring the reality image. According to the present invention, the virtual information can be discriminatively displayed by processing the objects of the reality image at the same level, or the virtual information can be discriminatively displayed by processing the objects of the reality image at different levels.

According to the present invention, a display range of the virtual information (an amount of the information) mapped on each of the objects in the reality image can be differently displayed according to the number of objects in the reality image or an importance value (or a priority) for each of the objects in the reality image. The display range of the virtual information (the amount of the information) can be determined according to the importance value or priority of the virtual information for the objects, and the importance value or priority of the virtual information can be determined according to a classification of the reality image (e.g., a background of a real world having such types of objects as a person, a building, an object, or the like, and a background of a real world related to an intangible spot based on a position).

According to the present invention, when the virtual information is displayed on the reality image according to augmented reality, the reality image acquired through the camera module can be processed at the same level, or the virtual information can be discriminatively applied to and displayed on the reality image by processing the reality image at different levels according to the importance value (or the priority) for each of objects in the reality image. When the reality image is processed at the same level, the virtual information can be discriminatively displayed by changing the display range of the virtual information (or the amount of the information) according to the number of objects in the reality image, and when the reality image is processed at different levels, the virtual information can be discriminatively displayed by changing the display range of the virtual information (or the amount of the information) for each of the objects according to the importance value (or the priority) of the objects in the reality image.

According to the present invention, a sense of distance and a sense of direction can be more intuitively provided according to the importance value (or the priority) of the reality image by discriminatively mapping and displaying the virtual information depending on the reality image according to the augmented reality in the electronic device. Accordingly, a user can more easily and conveniently identify the virtual information mapped onto each of the objects in the reality image according to the importance value (or the priority).

According to the present invention, user convenience along with usability, convenience, and competitiveness of the electronic device can be improved by implementing an optimal environment for displaying the virtual information using the augmented reality in the electronic device. The various embodiments of the present invention can be implemented in various electronic devices capable of performing data processing (e.g., displaying) and various devices corresponding to the electronic devices as well as a portable user device such as a portable terminal (e.g., a smart phone, a tablet computer, a Personal Digital Assistant (PDA), a digital camera, and the like).

In various embodiments of the present invention, an electronic device may include all electronic devices using an Application Processor (AP), a Graphic Processing Unit (GPU), and a Central Processing Unit (CPU) such as all information communication devices, all multimedia devices, and all application devices thereof, which support functions according to the various embodiments of the present invention.

Hereinafter, a configuration of an electronic device according to various embodiments of the present invention and a method of controlling an operation thereof will be described with reference to the accompanying drawings. The configuration of the electronic device according to the embodiments of the present invention and the method of controlling the operation thereof are not restricted by or limited to contents which will be described below and therefore, and it should be noted that they may be applied to various other embodiments based on the embodiments which will be described below.

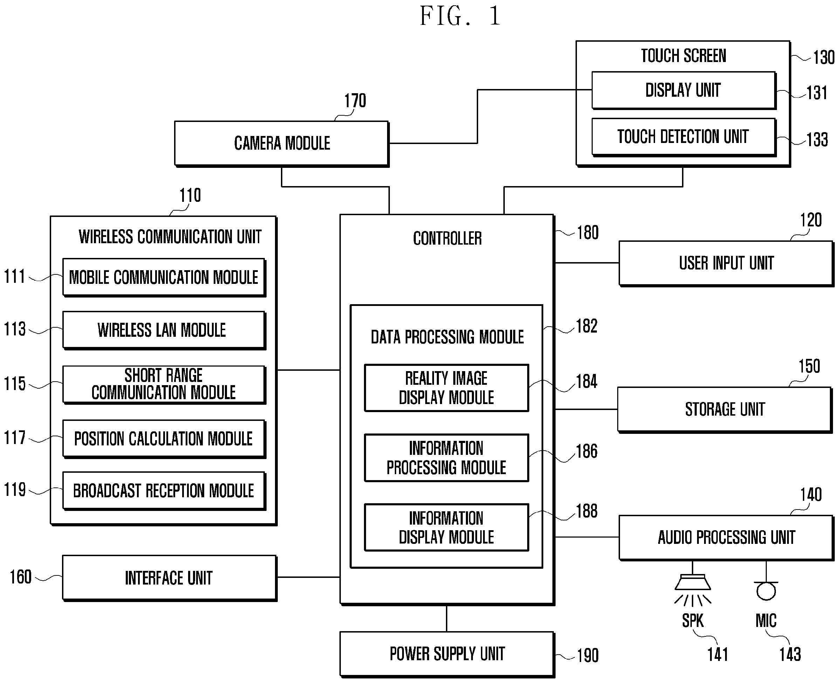

FIG. 1 is a block diagram schematically illustrating a configuration of an electronic device according to an embodiment of the present invention.

Referring to FIG. 1, the electronic device of the present invention includes a wireless communication unit 110, a user input unit 120, a touch screen 130, an audio processing unit 140, a storage unit 150, an interface unit 160, a camera module 170, a controller 180, and a power supply unit 190. According to various embodiments, the electronic device of the present invention may be implemented with more or fewer elements than those illustrated in FIG. 1. For example, when the electronic device according to the embodiment of the present invention does not support broadcast reception and reproduction functions, some modules including a broadcast reception module 119 of the wireless communication unit 110 may be omitted.

The wireless communication unit 110 includes one or more modules enabling wireless communication between the electronic device and a wireless communication system or between the electronic device and another electronic device. For example, the wireless communication unit 110 may include a mobile communication module 111, a wireless Local Area Network (LAN) module 113, a short range communication module 115, a position calculation module 117, and a broadcast reception module 119.

The mobile communication module 111 transmits/receives a wireless signal to/from at least one of a base station, an external mobile station, and various servers (e.g., an integration server, a provider server, a content server, an Internet server, a cloud server, and the like) on a mobile communication network. The wireless signal may include a voice call signal, a video call signal, or various types of data according to text/multimedia message transmission/reception. In various embodiments of the present invention, the wireless signal may include various sets of information related to reality images of a real world (information which can be used as virtual information in the present invention) which are received from various servers.

The wireless LAN module 113 represents a module for establishing wireless Internet access and a wireless LAN link with another electronic device, and may be embedded in or may be external to the electronic device. Wireless LAN (Wi-Fi), Wireless broadband (Wibro), World Interoperability for Microwave Access (Wimax), High Speed Downlink Packet Access (HSDPA), or the like may be used as a wireless Internet technology. The wireless LAN module 113 transmits or receives various sets of virtual information according to a user's selection to/from another electronic device when the wireless LAN link is established with the another electronic device. Further, the wireless LAN module 113 may receive virtual information related to a reality image displayed at a current position when wireless LAN communication is made with various servers. The wireless LAN module 113 may always be maintained in a turned-on status or may be turned on according to a user's setting or input.

The short range communication module 115 represents a module for short range communication. Bluetooth, Bluetooth Low Energy (BLE), Radio Frequency Identification (RFID), Infrared Data Association (IrDA), Ultra Wideband (UWB), ZigBee, Near Field Communication (NFC), or the like may be used as a short range communication technology. Further, the short range communication module 115 transmits or receives various sets of virtual information according to a user's selection to/from another electronic device when short range communication is established with the another electronic device. The short range communication module 115 may always be maintained in a turned-on status or may be turned on according to a user's setting or input.

The position calculation module 117 is a module for obtaining a position of the electronic device, and a representative example thereof is a Global Position System (GPS) module. The position calculation module 117 calculates three dimensional information on a current position according to a latitude, a longitude, and an altitude, by calculating information on a distance away from three or more base stations and accurate time information, and then applying trigonometry to the calculated information. Alternatively, the position calculation module 117 may calculate position information by continuously receiving position information of the electronic device from three or more satellites in real time. The position information of the electronic device may be obtained by various methods.

The broadcast reception module 119 receives a broadcast signal (e.g., a TV broadcast signal, a radio broadcast signal, a data broadcast signal, and the like) and/or broadcast related information (e.g., information associated with a broadcast channel, a broadcast program, or a broadcast service provider) from an external broadcast management server through a broadcast channel (e.g., a satellite broadcast channel, a terrestrial broadcast channel, or the like).

The user input unit 120 generates input data for control of an operation of the electronic device in correspondence to a user's input. The user input unit 120 may include a keypad, a dome switch, a touch pad (resistive type/capacitive type), a jog wheel, a jog switch, a sensor (e.g., a voice sensor, a proximity sensor, an illumination sensor, an acceleration sensor, a gyro sensor, and the like), and the like. Further, the user input unit 120 may be implemented in a button form at an outside of the electronic device, and some buttons may also be implemented on a touch panel. The user input unit 120 receives a user's input for entrance to a view mode of the present invention, and generates an input signal according to the user's input when the user's input is received. Further, the user input unit 120 receives a user's input for setting an importance value (or a priority) of virtual information corresponding to a reality image in the view mode of the present invention, and generates an input signal according to the user's input when the user's input is received. For example, the user input unit 120 may receive a user's input for setting a display range of virtual information (or an amount of information) to be displayed for a reality image.

The touch screen 130 is an input/output means for simultaneously performing an input function and a display function, and includes a display unit 131 and a touch detection unit 133. Particularly, in the embodiment of the present invention, when a user's touch event is input through the touch detection unit 133 while a screen according to an operation of the electronic device (e.g., an execution screen of an application (e.g., a view mode screen), a screen for an outgoing call, a messenger screen, a game screen, a gallery screen, and the like) is being displayed through display unit 131, the touch screen 130 transfers an input signal according to the touch event to the controller 180. Then, the controller 180 differentiates the touch event as will be described below and controls performance of an operation according to the touch event.

The display unit 131 displays (outputs) information processed by the electronic device. For example, when the electronic device is in a call mode, the display unit 131 may display a call related User Interface (UI) or Graphical User Interface (GUI). Further, when the electronic device is in a video call mode or photography mode, the display unit 131 displays a photographed and/or received image, a UI, or a GUI. Particularly, the display unit 131 may display an execution screen of a view mode corresponding to execution of an augmented reality application or camera application (e.g., a screen on which a reality image is displayed as a preview). Further, the display unit 131 discriminatively displays virtual information mapped onto the reality image according to a display range of the virtual information (or an amount of information) corresponding to the reality image within a screen on which the reality image is displayed. In addition, the display unit 131 supports a display in a landscape or portrait mode depending on an orientation of the electronic device (or a direction in which the electronic device is placed) and a display conversion depending on an orientation change between the landscape and portrait modes.

The display unit 131 may include at least one of a Liquid Crystal Display (LCD), a Thin Film Transistor-LCD (TFT-LCD), a Light Emitting Diode (LED), an Organic LED (OLED), an Active Matrix OLED (AMOLED), a flexible display, a bended display, and a 3D display. Some of the displays may be implemented as a transparent display configured with a transparent or photo-transparent type such that the outside can be viewed therethrough.

The touch detection unit 133 may be positioned on the display unit 131, and may detect a user's touch event (e.g., a single touch event, a multi-touch event, a touch based gesture event, a photography event, and the like) contacting a surface of the touch screen 130. When detecting the user's touch event on the surface of the touch screen 130, the touch detection unit 133 detects a coordinate where the touch event is generated, and transmits the detected coordinate to the controller 180. The touch detection unit 133 detects a touch event generated by a user, generates a signal according to the detected touch event, and transmits the generated signal to the controller 180. The controller 180 performs a function corresponding to an area where the touch event is generated, by the signal transmitted from the touch detection unit 133. The touch detection unit 133 receives a user's input for entrance to a view mode, and transmits, to the controller 180, a signal according to a touch event generated by the user's input. The touch detection unit 133 receives a user's input for setting an importance value (or a priority) of virtual information corresponding to a reality image in the view mode, and transmits, to the controller 180, a signal according to a touch event generated by the user's input. For example, the touch detection unit 133 receives a user's input for setting a display range of virtual information (or an amount of information) to be displayed for a reality image.

The touch detection unit 133 may be configured to convert a change in a pressure applied to a specific portion of the display unit 131 or a change in an electrostatic capacity generated at a specific portion of the display unit 131 into an electric input signal. The touch detection unit 133 may be configured to detect a touch pressure according to an applied touch method as well as a touched position and a touched area. When there is a touch input for the touch detection unit 133, a signal (signals) corresponding to the touch input may be transferred to a touch controller (not illustrated). The touch controller may process the signal (signals), and then may transmit corresponding data to the controller 180. Hereby, the controller 180 may identify which area of the touch screen 130 is touched.

The audio processing unit 140 transmits an audio signal input from the controller 180 to a speaker (SPK) 141, and performs a function of transferring an audio signal such as a voice input from a microphone (MIC) 143 to the controller 180. The audio processing unit 140 converts voice/sound data into an audible sound to output the audible sound through the speaker 141 under control of the controller 180, and converts an audio signal such as a voice received from the microphone 143 into a digital signal to transfer the digital signal to the controller 180. The audio processing unit 140 outputs voice/sound data corresponding to a reality image in the view mode under the control of the controller 180, and when outputting virtual information corresponding to the reality image, the audio processing unit 140 also outputs voice/sound data corresponding to the corresponding virtual information under the control of the controller 180. The audio processing unit 140 also receives audio data for instructing to set or display a range of virtual information (or an amount of information) to be displayed for a reality image, to transfer the audio data to the controller 180.

The speaker 141 may output audio data received from the wireless communication unit 110 or stored in the storage unit 150, in a view mode, a call mode, a word processing mode, a messenger mode, a voice (video) recording mode, a voice recognition mode, a broadcast reception mode, a media content (a music file and a video file) reproduction mode, a photography mode, and the like. The speaker 141 may also output a sound signal related to functions (e.g., execution of a view mode, reception of a call connection, sending of a call connection, data insertion, photography, reproduction of media content, and the like) performed by the electronic device.

The microphone 143 receives and processes an external sound signal into an electric audio data in a view mode, a call mode, a word processing mode, a message mode, a messenger mode, a voice (video) recording mode, a voice recognition mode, a photography mode, and the like. In the call mode, the processed audio data may be converted into a format that can be transmitted to a mobile communication base station and then may be output through the mobile communication module 111. Various noise removal algorithms for removing noise generated in a process of receiving an external sound signal may be implemented for the microphone 143.

The storage unit 150 stores programs for processing and control of the controller 180, and performs a function of temporarily storing input/output data (e.g., virtual information, contact information, document data, photographing data, messages, chatting data, media content (e.g., an audio, a video, and an image), and the like). The storage unit 150 may store a usage frequency according to an operation of functions of the electronic device (e.g., an application usage frequency, a data usage frequency, a search word usage frequency, a media content usage frequency, and the like), and an importance value and a priority according to a display range of virtual information (or an amount of information). The storage unit 150 may also store various patterns of vibration data and sound data output in response to a touch input on the touch screen 130.

The storage unit 150 may continuously or temporarily store an Operating System (OS) of the electronic device, a program related to a control operation of mapping virtual information onto a reality image of a real world input through the camera module 170 and displaying them, a program related to a control operation of determining a display range of the virtual information (or an amount of the information) overlapped and displayed on the reality image in a view mode, a program related to a control operation of discriminatively applying and displaying the virtual information depending on an importance value (or a priority) according to the display range of the virtual information (or the amount of information), a program related to a control operation for an input and display through the touch screen 130, and data generated by operations of the respective programs. Further, the storage unit 150 may store various setting information related to an output of the virtual information to the reality image in the view mode.

The setting information includes information related to an importance value (or a priority) according to a display range of virtual information (or an amount of information) displayed in correspondence to a reality image in the view mode. Further, the setting information includes information related to a processing method for a reality image obtained by the camera module 170 when virtual information is displayed on the reality image. The information related to the processing method may include information on a method of processing objects of the reality image at the same level or at different levels depending on the importance value (or the priority) thereof. Further, in the method of processing the objects in the reality image at the same level, the information related to the processing method includes information related to a display range (or a priority) of virtual information to be displayed depending on the number of objects in the reality image, and in the method of processing the objects in the reality image at the different levels, the information related to the processing method includes information related to a display range (or a priority) of virtual information for each of the objects according to an importance value (or a priority) of the objects in the reality image. As described above, the storage unit 150 stores various information related to the operation for discriminatively displaying the information in the view mode of the present invention. Examples may be represented as illustrated in Tables 1, 2, 3, and 4.

**Table 1**

| Reality image attribute | Processing method 1: Situation Classification | Processing method 2: Importance Value Classification |
|---|---|---|
| Identically process objects of a reality image displayed on a screen at the same level | a small number of objects displayed on a screen | High |
| | an average number of objects displayed on a screen | Medium |
| | a large number of objects displayed on a screen | Low |
| Discriminatively process objects of a reality image displayed on a screen at different levels | - Large-sized object on a screen | High |
| | - Object close to an electronic device | |
| | - Most recent object (e.g., today) | |
| | - Meduim-sized object on a screen | Medium |
| | - Object located an average distance from an electronic device | |
| | - Recent object (e.g., this week or this month) | |
| | - Small-sized object on a screen | Low |
| | - Object far from an electronic device | |
| | - Previous object (e.g., last year or 5 years ago) | |

As illustrated in Table 1, in the embodiment of the present invention, a classification or an attribute for a reality image may be differentiated according to a method of identically processing objects of a reality image displayed on a screen and a method of discriminatively processing objects of a reality image displayed on a screen. Further, the former (identically) processing method may be classified according to the number of objects as a detailed classification (e.g., a situation classification). For example, the former processing method may be classified into a method in a case in which a small number of objects are displayed on a screen, a method in a case in which an average number of objects are displayed on a screen, and a method in a case in which a large number of objects are displayed on a screen. Further, in the case of the former processing method, an importance value may be classified into high, medium, and low in accordance with the situation classification. Although the situation is classified into three steps in the embodiment of the present invention, the situation may be classified into more or fewer steps without being limited thereto.

Further, the latter (discriminatively) processing method may be classified in consideration of a size of objects, a distance between the electronic device and objects, or time when objects are provided (or time when objects are displayed on a screen) as a detailed classification (e.g., a situation classification). For example, objects in a reality image may be classified into a first classification such as a large-sized object displayed on the screen, an object close to the electronic device, or the most recent object (e.g., today), a second classification such as a medium-sized object displayed on the screen, an object located an average distance from the electronic device, or a recent object (e.g., this week or this month), and a third classification such as a small-sized object displayed on the screen, an object far from the electronic device, or a previous object (e.g., last year or five years ago).

Further, in the case of the latter processing method, an importance value may be classified into high, medium, and low in accordance with the situation classification. Although the situation is classified into three steps in the embodiment of the present invention, the situation may be classified into more or fewer steps without being limited thereto.

**Table 2**

| Information attribute | | High Importance value | Medium Importance value | Low Importance value |
|---|---|---|---|---|
| Classification of Reality image(Person , Background, and Object) | Contact | Mobile number, Name | Office number, Ring-tone set | Email, Nickname |
| | Attraction spot AR | Attraction name, image | How far from here? | Review of attraction |
| | SNS/NEWS | SNS user, Title | Sub title, image, source | Body text, related links |

As illustrated in Table 2, in the embodiment of the present invention, an attribute of virtual information may be classified into contact information, attraction spot information, and SNS/NEWS information to correspond to a classification of a reality image (e.g., a person, a background, and an object). Although the contact information, the attraction spot information, and the SNS/NEWS information are given as examples of the virtual information in the embodiment of the present invention, various sets of information that can be provided through augmented reality in addition to the aforementioned information may be included in the virtual information. Further, although an importance value of the virtual information is classified into three steps such 'High', 'Medium', and 'Low' in the embodiment of the present invention, the importance value of the virtual information may be diversely implemented with two or more steps.

For example, specifically describing the contact information, among various fields configuring the contact information, "Name" and "Mobile number" fields may be set to have a high importance value, "Office number" and "Ring-tone set" fields may be set to have a medium importance value, and other additional fields (e.g., Address, Notes, Website, Events, Relationship, and the like) in addition to "Email" and "Nickname" fields may be set to have a low importance value. Further, specifically describing the attraction information, "Attraction name" and "image" fields may be set to have a high importance value, "how far from here?" field may be set to have a medium importance value, and "Review of attraction" field may be set to have a low importance value. Moreover, specifically describing the SNS/NEWS information, "SNS user" and "Title" fields may be set to have a high importance value, "Sub title", "image", and "source" fields may be set to have a medium importance value, and "Body text" and "related links" fields may be set to have a low importance value. Such an importance value classification of the virtual information may be basically set and provided when the electronic device is provided, and items according to the importance value may also be modified, added, or deleted according to a user's setting. In the embodiment of the present invention, categories into which a reality image of a specific subject and virtual information of the reality image are classified are not limited, and various applications may be included which can maximize visual efficiency of a user at a time of transferring information by classifying and mapping the reality image and the virtual information.

**Table 3**

| Reality image classification / Information attribute | | High importance value | Medium importance value | Low importance value | Information display |
|---|---|---|---|---|---|
| Identically process objects of a reality image | a small number of objects | √ | √ | √ | Full info. |
| | an average number of objects | √ | √ | | Mid info. |
| | a large number of objects | √ | | | Least info. |

As illustrated in Table 3, in the method of identically processing objects of a reality image, an importance value of the objects may be classified corresponding to the number of objects displayed on a screen, such as a small number of objects displayed on the screen, an average number of objects displayed on the screen, and a large number of objects displayed on the screen. An importance value of virtual information (e.g., a display range of the virtual information (or an amount of the information)) may be discriminatively applied and displayed according to the importance value of the objects (e.g., the number of objects).

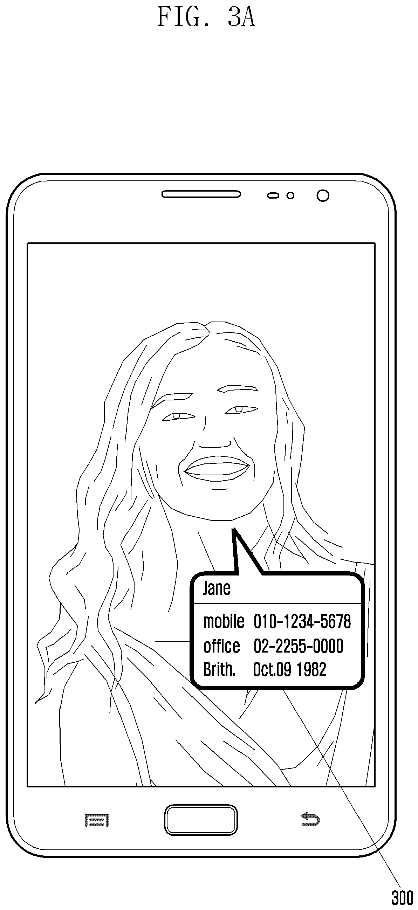

For example, in the case in which a small number of objects are displayed on the screen, a large amount of information may be displayed so that all information having an importance value ranging from high to low may be displayed. An example of such an operation is illustrated in FIG. 3A as will be described below.

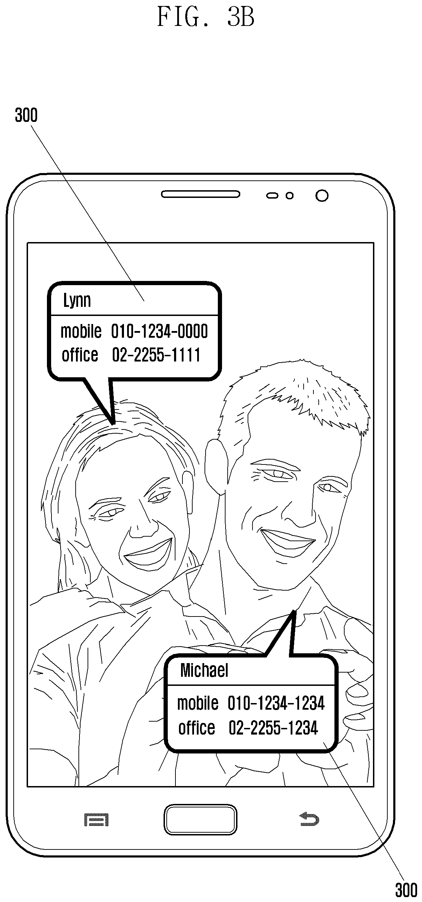

Further, in the case in which an average number of objects are displayed on the screen, bubble windows for displaying the virtual information may overlap each other if all information is displayed, and due to this, the objects and the virtual information corresponding to the objects may not be correctly displayed so that the information having a low importance value may be omitted. An example of such an operation is illustrated in FIG. 3B as will be described below.

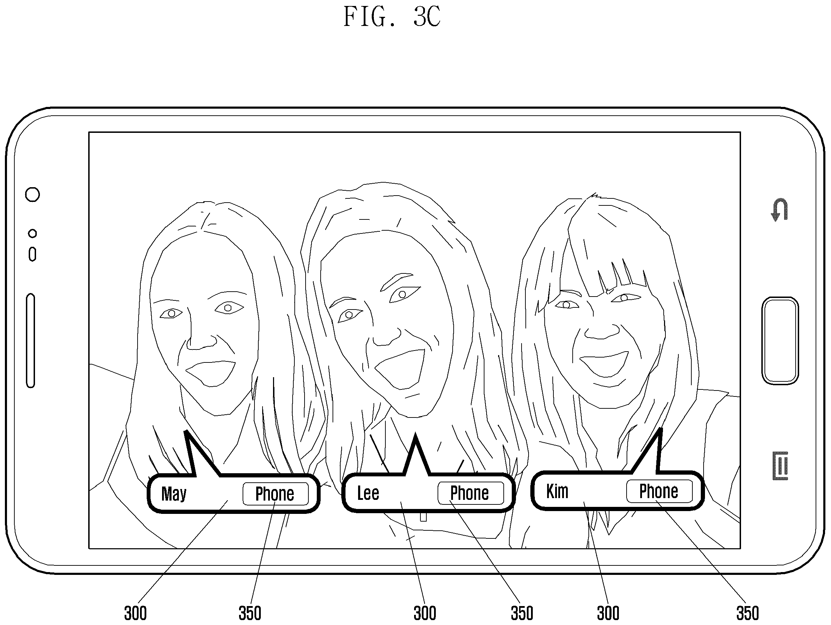

Furthermore, in the case in which a large number of objects are displayed on the screen, the least amount of information, namely, only the most important information may be displayed. An example of such an operation is illustrated in FIG. 3C as will be described below.

**Table 4**

| Reality image classification / Information attribute | | High importance value | Medium importance value | Low importance value | Information display |
|---|---|---|---|---|---|
| Discriminatively process objects of a reality image | - Large-sized object | √ | √ | √ | Full info. |
| | - Object close to an electronic device | | | | |
| | - Most recent object | | | | |
| | - Meduim-sized object | √ | √ | | Mid info. |
| | - Object located an average distance from an electronic device | | | | |
| | - Recent object | | | | |
| | - Small-sized object | √ | | | Least info. |
| | - Object far from an electronic device | | | | |
| | - Previous object | | | | |

As illustrated in Table 4, in the method of discriminatively processing objects of a reality image, an importance value of the objects may be classified corresponding to a size of the objects displayed on the screen such as a large-sized object, a medium-sized object, and a small-sized object. Further, an importance value of the objects may be classified corresponding to a distance between the electronic device and the objects (e.g., a classification according to a spatial depth on a screen) such as an object close to the electronic device, an object an average distance from the electronic device, and an object far from the electronic device. Moreover, an importance of the objects may be classified corresponding to time when the objects are provided (or time when the objects are displayed on the screen), such as the most recent object, a recent object, and a previous object. An importance value of virtual information (e.g., a display range of the virtual information (or an amount of the information)) may be discriminatively applied and displayed according to the importance value of the objects (e.g., the size of the objects, the distance between the electronic device and the objects, and the time when the objects are provided).

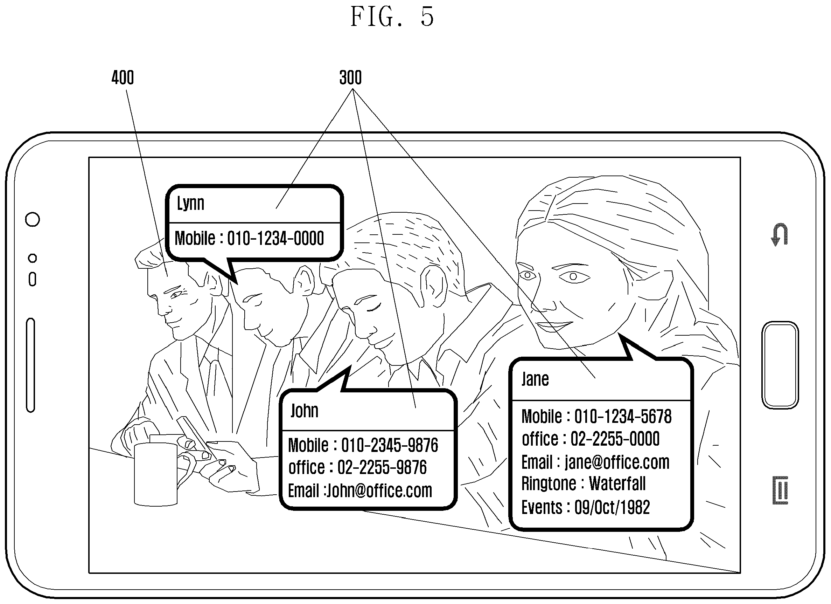

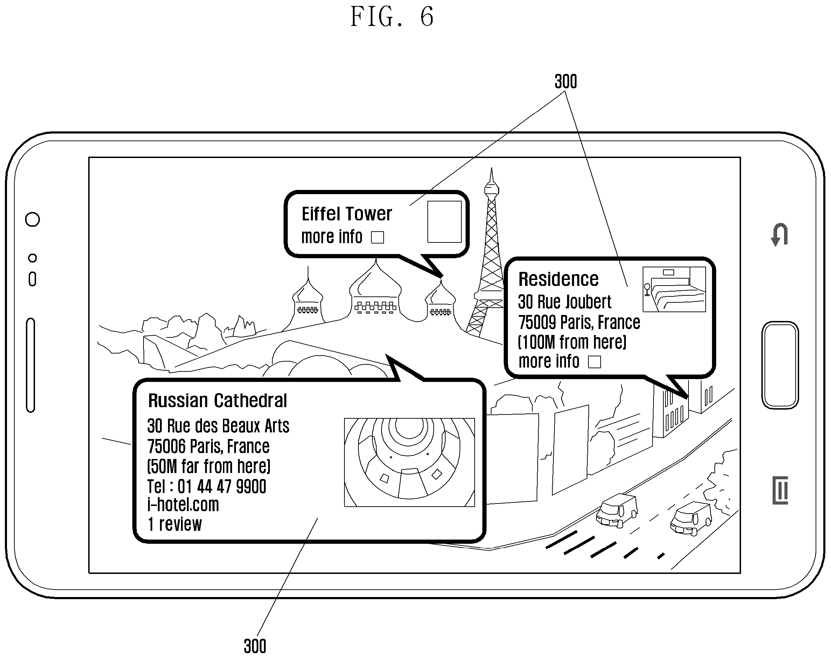

For example, all information having an importance value ranging from high to low may be displayed for the large-sized object, the object close to the electronic device, or the most recent object among the objects displayed on the screen. As an example, all information belonging to categories having high, medium, and low importance values, respectively, may be displayed for the objects having a high importance value among the objects displayed on the screen. An example of such an operation is illustrated in FIGS. 5 and 6 as will be described below.

Further, information having a low importance value may be omitted for the medium-sized object, the object located the average distance from the electronic device, or the recent object among the objects displayed on the screen. For example, information belonging to categories having high and medium importance values, respectively, other than information belonging to a category having a low importance value may be displayed for the objects having a medium importance value among the objects displayed on the screen. An example of such an operation is illustrated in FIGS. 5 and 6 as will be described below.

Further, the least amount of information, namely, only the most important information may be displayed for the small-sized object, the object far from the electronic device, and the previous object among the objects displayed on the screen. For example, only information belonging to a category having a high importance value may be displayed for the objects having a low importance value among the objects displayed on the screen. An example of such an operation is illustrated in FIGS. 5 and 6 as will be described below.

The storage unit 150 includes at least one type of storage medium among a flash memory type memory, a hard disk type memory, a micro type memory, a card type memory (e.g., a Secure Digital (SD) card or an eXtream Digital (XD) card), a Dynamic Random Access Memory (DRAM) type memory, a Static RAM (SRAM) type memory, a Read-Only Memory (ROM) type memory, a Programmable ROM (PROM) type memory, an Electrically Erasable PROM (EEPROM) type memory, a Magnetic RAM (MRAM) type memory, a magnetic disk type memory, and an optical disk type memory. The electronic device may also operate in relation to a web storage performing a storage function of the storage unit 150 on the Internet.

The interface unit 160 serves as a passage between the electronic device and all external devices connected to the electronic device. The interface unit 160 transfers data transmitted or power supplied from an external device to respective elements within the electronic device, or allows data within the electronic device to be transmitted to an external device. For example, the interface unit 160 may include a wired/wireless headset port, an external charger port, a wired/wireless data port, a memory card port, a port for a connection of a device provided with an identification module, an audio input/output port, a video input/output port, an earphone port, and the like.

The camera module 170 represents a configuration for supporting a photography function of the electronic device. The camera module 170 may support taking a photo and a video of a subject. The camera module 170 photographs an arbitrary subject and transfers the photographed data to the display unit 131 and the controller 180 under the control of the controller 180. The camera module 170 includes an image sensor (or a camera sensor) for converting an input photo signal into an electric signal and an image signal processing unit for converting the electric signal input from the image sensor into a digital image data. The image sensor may include a sensor using a Charge-Coupled Device (CCD) or a Complementary Metal-Oxide-Semiconductor (CMOS). The camera module 170 may support an image processing function for support of photographing according to various photographing options (e.g., zooming, a screen ratio, an effect (e.g., sketch, mono, sepia, vintage, mosaic, and the like), a picture frame, and the like) in accordance with a user's setting. The camera module 170 acquires a reality image corresponding to a subject of a real world and transfers the same to the display unit 131 and the controller 180, in a view mode according to the embodiment of the present invention.

The controller 180 controls an overall operation of the electronic device. For example, the controller 180 performs a control related to voice communication, data communication, video communication, and the like. The controller 180 is also provided with a data processing module 182 for processing an operation related to a function of mapping and displaying virtual information on a reality image of a real world in a view mode of the present invention. In the present invention, the data processing module 182 may be implemented within the controller 180 or separately from the controller 180. In various embodiments of the present invention, the data processing module 182 includes a reality image display module 184, an information processing module 186, and an information display module 188. Additional information on the reality image display module 184, the information processing module 186, and the information display module 188 is provided below.

The controller 180 (e.g., the reality image display module 184) controls displaying of a screen according to a view mode. For example, the controller 180 (e.g., the reality image display module 184) controls displaying of a screen (e.g., a reality image preview screen) according to the view mode in response to a user's input for execution of the view mode, while executing a specific application (e.g., a word processor, an e-mail editor, a web browser, or the like) and displaying an execution screen of the corresponding application.

The controller 180 (e.g., the information processing module 186) performs an operation of extracting objects included in the reality image and analyzing the extracted objects at a time point of displaying the reality image according to the view mode. The controller 180 (e.g., the information processing module 186) determines a processing method for displaying virtual information for the objects of the reality image. For example, the controller 180 (e.g., the information processing module 186) determines, with reference to setting information set in advance in the storage unit 150, whether the processing method corresponds to a method of displaying virtual information of the same level for each of the objects of the reality image or a method of displaying virtual information of a different level for each of the objects of the reality image.

The controller 180 (e.g., the information processing module 186) calculates a display range of the virtual information (or an amount of the information) corresponding to an importance value of the objects (e.g., the number of objects) in the reality image, in the method of displaying the virtual information of the same level for each of the objects. Further, the controller 180 (e.g., the information processing module 186) calculates a display range of the virtual information (or an amount of the information) corresponding to an importance value of the objects (e.g., a size of the objects, a distance between the electronic device and the objects, and time when the objects are provided) in the reality image, in the method of displaying the virtual information of the different level for each of the objects.

The controller 180 (e.g., the information display module 188) maps the virtual information onto each of the objects in the reality image by using the calculated display range of the virtual information, and allows the virtual information mapped onto the corresponding object to be overlapped and displayed on the reality image.

A detailed control operation of the controller 180 will be described in an example of an operation of the electronic device and a control method thereof with reference to drawings as illustrated below.

The controller 180 according to the embodiment of the present invention controls various operations related to a general function of the electronic device in addition to the aforementioned functions. For example, when a specific application is executed, the controller 180 controls an operation and displaying of a screen for the specific application. Further, the controller 180 may receive input signals corresponding to various touch event inputs supported by a touch-based input interface (e.g., the touch screen 130) and controls an operation of functions according to the received input signals. Moreover, the controller 180 also controls data transmission/reception based on wired communication or wireless communication.

The power supply unit 190 may receive external power and internal power, and supplies power required for an operation of the elements under the control of the controller 180.

As described above, the electronic device according to the various embodiments of the present invention may be implemented with the computer-implemented reality image display module 184 for displaying the reality image acquired in the view mode, the computer-implemented information processing module 186 for determining the display range of the virtual information for each of the objects depending on the importance value of the objects according to the reality image, and the computer-implemented information display module 188 for mapping and displaying the virtual information on each of the objects.

In the various embodiments of the present invention, the information processing module 186 analyzes the importance value of the objects in the reality image, and discriminatively determines the display range of the virtual information corresponding to each of the objects according to the analyzed importance value. The importance value of the objects may be diversely classified depending on the number of objects, the size of the objects, the distance between the electronic device and the objects, the time when the objects are provided, the time when the objects are displayed, and the like. For example, the information processing module 186 determines the display range of the virtual information applied to each of the objects at the same level according to the importance value of the objects (e.g., the number of objects) within the reality image, and maps and displays the virtual information within the determined display range of the virtual information on each of the objects. The information processing module 186 also determines the display range of the virtual information applied to each of the objects at the different levels according to the importance value of the objects (e.g., the size of objects, the distance between the electronic device and the objects, the time when the objects are provided, or the time when the objects are displayed) within the reality image, and maps and displays the virtual information within the determined display range of the virtual information on each of the objects.

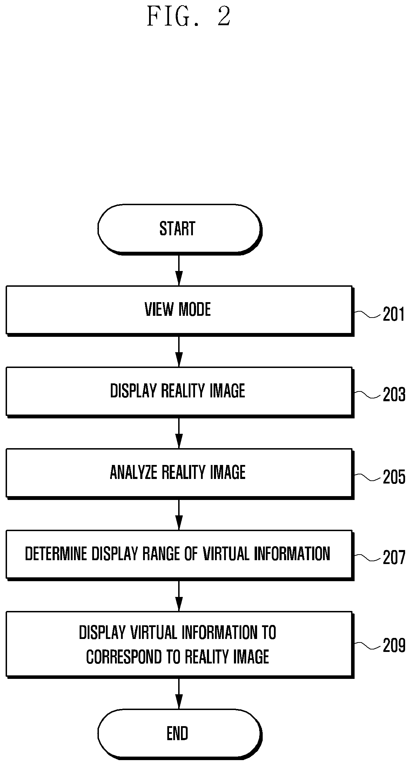

FIG. 2 is a flowchart illustrating a method of providing virtual information in an electronic device according to an embodiment of the present invention.

Referring to FIG. 2, the controller 180 executes a view mode in step 201, and controls displaying of a reality image according to the execution of the view mode in step 203. For example, the controller 180 may execute an augmented reality application or a camera application requested by a user, and may accordingly drive the camera module 170. The controller 180 may control displaying of a screen on which a reality image corresponding to a subject of a real world acquired through the camera module 170 is provided as a preview in a view mode related to the executed application.

The controller 180 analyzes the reality image at a time point of displaying the reality image, in step 205. For example, the controller 180 extracts objects configuring the reality image, and analyzes a classification (or an attribute) of the reality image based on the extracted objects. As an example, the controller 180 may identify which type the reality image is related to among object types such as a person, a building, and an object, or whether the reality image is related to an intangible type such as an intangible space (or spot) provided as a position-based service. The controller 180 may determine complexity (e.g., the number of objects, an importance value of objects, and the like) in the classification (or attribute) of the corresponding reality image.

The controller 180 determines a display range of virtual information (or an amount of information) which will be overlapped and displayed on the analyzed reality image, in step 207. For example, the controller 180 determines a processing method of displaying the virtual information, and determines a display range of the virtual information corresponding to the classification of the reality image and the processing method. As an example, the controller 180 may determine whether the processing method corresponds to a method of displaying the virtual information of the same level for each of the objects in the reality image, or a method of displaying the virtual information of a different level for each of the objects in the reality image. The controller 180 may overlap and display the virtual information on the reality image based on the determined processing method, in which the virtual information of the same or different level may be mapped for each of the objects configuring the reality image. Such examples have been described above with reference to Tables 1 to 4.

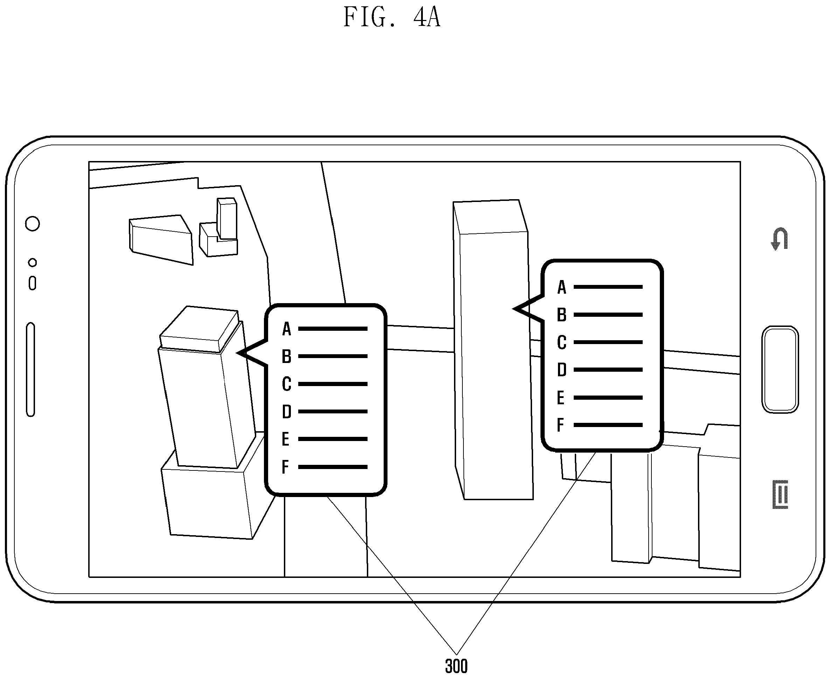

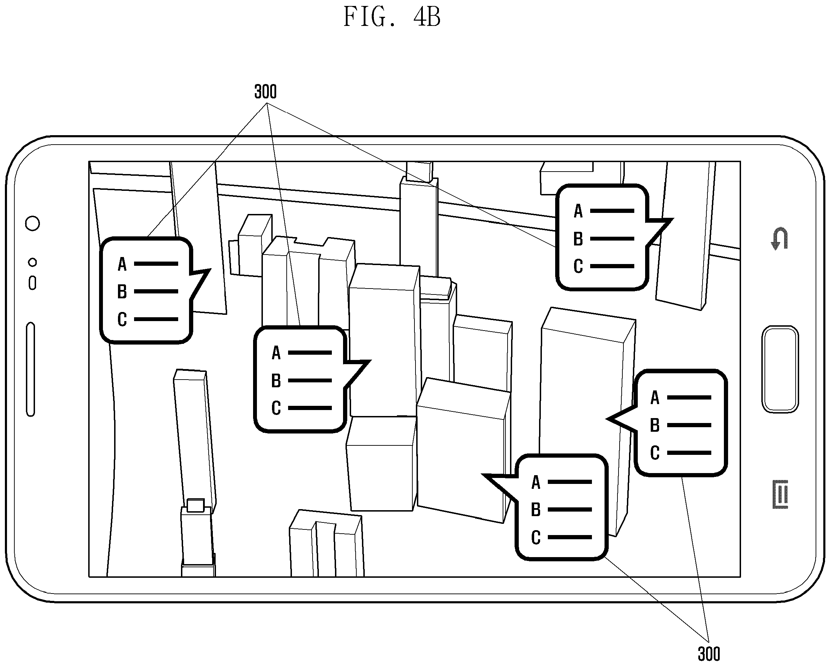

The controller 180 performs a control such that the virtual information is overlapped and displayed to correspond to the reality image, in step 209. For example, controller 180 displays the virtual information of the same or different level for each of the objects in the reality image according to the determined display range of the virtual information. As an example, when it is determined that the processing method corresponds to the processing method by the same level and the display range of the virtual information for the reality image corresponds to a low importance value, the virtual information belonging to a category having the low importance value may be displayed for each of the objects in the reality image. Examples of such an operation are provided in the drawings, for example, FIGS. 3A to 3C or FIGS. 4A and 4B. Further, when the processing method corresponds to the processing method by the different level, the display range of the virtual information for each of the objects in the reality image is discriminatively applied and determined, and the virtual information belonging to a category having a high, medium, or low importance value is discriminatively displayed for each of the objects in the reality image. Examples of such an operation are provided in the drawings, for example, in FIGS. 5 to 7.

FIGS. 3A to 3C illustrate examples of an operation in which objects of a reality image are processed at the same level in an electronic device according to an embodiment of the present invention.

As described in the various embodiments of the present invention, FIGS. 3A to 3C illustrate examples of an operation in which virtual information corresponding to each of objects in a reality image displayed on a screen is equally displayed according to a display range of the virtual information (or an amount of the information) at the same level, and the display range of the displayed virtual information is differentiated according to the number of objects. The examples of such an operation in which the display range of the virtual information is discriminatively applied have been described above with reference to Tables 1 to 4.

Referring to FIGS. 3A to 3C, FIG. 3A illustrates an example of a screen of the electronic device in a case in which a reality image of a subject acquired through the camera module 170 in a view mode contains one person object, FIG. 3B illustrates an example of a screen of the electronic device in a case in which a reality image of a subject acquired through the camera module 170 in a view mode contains two person objects, and FIG. 3C illustrates an example of a screen of the electronic device in a case in which a reality image of a subject acquired through the camera module 170 in a view mode contains three person objects.

Further, it may be assumed in FIGS. 3A to 3C that an attribute of virtual information corresponding to the person object is based on contact information, and various fields configuring the contact information are classified according to an importance value (or a priority) as illustrated in Table 2.

As illustrated in FIG. 3A, virtual information may be mapped and displayed on an object in response to the execution of a view mode. The virtual information includes all information having an importance value ranging from high to low, referring to Table 3 as described above. The virtual information may be provided through a specific bubble window 300 corresponding to various speech bubble forms. For example, as illustrated in FIG. 3A, virtual information for the person object, namely, a name (e.g., Jane), a mobile number (e.g., 010-1234-5678), an office number (e.g., 02-2255-0000), and a birth date (e.g., Oct. 09, 1982) are displayed through the bubble window 300 overlapped on the person object. When a small number of objects are displayed on the screen as illustrated in FIG. 3A, all information belonging to categories having high, medium, and low importance values, respectively, is provided.

As illustrated in FIG. 3B, virtual information may be mapped and displayed on objects in response to the execution of a view mode, and a display range of the virtual information may be different to correspond to more person objects than in FIG. 3A. The virtual information includes information having high and medium importance values and excludes information having a low importance value, referring to Table 3 as described above. For example, as illustrated in FIG. 3B, virtual information corresponding to the person objects, namely, names (e.g., Jane and Michael), mobile numbers (e.g., 010-1234-0000 and 010-1234-1234), and office numbers (e.g., 02-2255-1111 and 02-2255-1234) are displayed through bubble windows 300 overlapped on the person objects. When an average number of objects are displayed on the screen as illustrated in FIG. 3B, information belonging to categories having high and medium importance values, respectively, is provided.

As illustrated in FIG. 3C, virtual information may be mapped and displayed on objects in response to execution of a view mode, and a display range of the virtual information may be different to correspond to more person objects than in FIG. 3B. The virtual information includes only information having a high importance value and excludes information having low and medium importance values, referring to Table 3 as described above. For example, as illustrated in FIG. 3C, virtual information corresponding to the person objects, namely, names (e.g., May, Lee, and Kim) and mobile numbers (e.g., phone) are displayed through bubble windows 300 overlapped on the person objects. When a large number of objects are displayed on the screen as illustrated in FIG. 3C, only information belonging to a category having a high importance value is provided.

Here, in the example of FIG. 3C, the names (e.g., May, Lee, and Kim) which are virtual information corresponding the person objects are displayed, and "phone" is substituted for "mobile number". The example of FIG. 3C is aimed at preventing the objects and the virtual information from not being intuitively displayed due to an overlap between the bubble windows 300 corresponding to the respective person objects. To this end, "mobile number" mapped onto each of the person objects may be selectively displayed as a pop-up, or a sub-item 350 (e.g., "phone) capable of directly making a call may be substituted for "mobile number" which is the virtual information having a high importance value. However, it is apparent that the present invention is not limited thereto, and all information within the display range of the corresponding virtual information may also be displayed. In this case, an arrangement status of the objects may be grasped, and the bubble windows 300 of the respective objects may be properly arranged so as not to overlap each other according to the arrangement of the objects.

FIGS. 4A and 4B illustrate examples of an operation in which objects of a reality image are processed at the same level in an electronic device according to an embodiment of the present invention.

As described in the various embodiments of the present invention, FIGS. 4A and 4B illustrate examples of another operation in which virtual information corresponding to each of the objects in a reality image displayed on a screen is equally displayed according to a display range of the virtual information (or an amount of the information) at the same level, and the display range of the displayed virtual information is differentiated according to the number of objects. The examples of such an operation in which the display range of the virtual information is discriminatively applied have been described above with reference to Tables 1 to 4.

Referring to FIGS. 4A and 4B, FIG. 4A illustrates an example of a screen of an electronic device in a case in which a reality image of a subject acquired through the camera module 170 in a view mode contains a predetermined number of building objects (e.g., two building objects), and FIG. 4B illustrates an example of a screen of an electronic device in a case in which a reality image of a subject acquired through the camera module 170 in a view mode contains more building objects than in FIG. 4A (e.g., five building objects).

Further, it may be assumed in FIGS. 4A and 4B that an attribute of the virtual information corresponding to the building objects is based on attraction spot information (e.g., hotel information), and various sets of information configuring the attraction spot is classified into A (e.g., a hotel name), B (e.g., a hotel charge), C (e.g., a distance), D (e.g., a phone number), E (e.g., a web page), and F (e.g., a review). Here, it may be assumed that among the aforementioned virtual information A to F, the virtual information A to C belongs to a category having a high importance value, the virtual information D and E belongs to a category having a medium importance value, and the virtual information F belongs to a category having a low importance value.

As illustrated in FIG. 4A, virtual information is mapped and displayed on objects in response to execution of a view mode. The virtual information may include all information having an importance value ranging from high to low. For example, as illustrated in FIG. 4A, virtual information corresponding to the corresponding building object (e.g., a hotel object), namely, A (e.g., a hotel name), B (e.g., a hotel charge), C (e.g., a distance), D (e.g., a phone number), E (e.g., a web page), and F (e.g., a review) may be displayed through a bubble window 300 overlapped on the building object. When a small number of objects are displayed on the screen as illustrated in FIG. 4A, all information belonging to categories having high, medium, and low importance values, respectively, is provided.

As illustrated in FIG. 4B, virtual information is mapped and displayed on objects in response to the execution of a view mode, and a display range of the virtual information may be different to correspond to more building objects (e.g., hotel objects) than in FIG. 4A. The virtual information may include only information having a high importance value and exclude information having low and medium importance values. For example, as illustrated in FIG. 4B, virtual information corresponding to the corresponding building object, namely, A (e.g., a hotel name), B (e.g., a hotel charge), and C (e.g., a distance) may be displayed through a bubble window 300 overlapped on the building object. When a large number of objects are displayed on the screen as illustrated in FIG. 4B, only information belonging to a category having a high importance value is provided.

FIGS. 5 and 6 illustrate examples of an operation in which objects of a reality image are processed at different levels in an electronic device according to an embodiment of the present invention.

As described in the various embodiments of the present invention, FIGS. 5 and 6 illustrate examples of an operation in which virtual information corresponding to each of the objects in a reality image displayed on a screen is discriminatively displayed according to a display range of the virtual information (or an amount of the information) at a different level, and the display range of the displayed virtual information is differentiated according to an importance value (e.g., a distance) of the objects. The examples of such an operation in which the display range of the virtual information is discriminatively applied have been described above with reference to Tables 1 to 4.

Referring to FIGS. 5 and 6, FIG. 5 illustrates an example of a screen of an electronic device in a case in which a reality image of a subject acquired through the camera module 170 in a view mode contains a plurality of person objects, and FIG. 6 illustrates an example of a screen of an electronic device in a case in which a reality image of a subject acquired through the camera module 170 in a view mode contains a plurality of building objects (e.g., hotel objects).

As illustrated in FIG. 5 and 6, virtual information is mapped and displayed on objects in response to the execution of a view mode. The virtual information may be discriminatively applied and displayed for each of the objects according to an importance value of the object. As illustrated in FIGS. 5 and 6, a display range of virtual information (or an amount of information) for each of the objects may be discriminatively displayed through a bubble window 300 overlapped on the object.

It may be assumed in FIG. 5 that an attribute of the virtual information corresponding to person objects is classified into a name, a mobile number, an office number, an e-mail address, a ring-tone, and events based on various fields of contact information. Here, it may be assumed in FIG. 5 that among the aforementioned information, the name and the mobile number belong to a category having a high importance value, the office number and the e-mail address belong to a category having a medium importance value, and the ring-tone and the events are belong to a category having a low importance value.

For example, in a case of an object closest to the electronic device (an object most proximate to the electronic device or the largest object displayed on a screen) (e.g., a "Jane" object) among the person objects, virtual information having high, medium and low importance values corresponding to the object, namely, a name (e.g., Jane), a mobile number (e.g., 010-2345-6789), an office number (e.g., 02-2255-0000), an e-mail address (e.g., Jane@office.com), a ring-tone (e.g., waterfall), and events (e.g., 09/Oct/1982) is displayed. Further, in a case of an object located an average distance from the electronic device (an object usually proximate to the electronic device or a medium-sized object on a screen) (e.g., a "John" object) among the person objects, virtual information having high and medium importance values corresponding to the object, namely, a name (e.g., John), a mobile number (e.g., 010-2345-9876), an office number (e.g., 02-2255-9876), and an e-mail address (e.g., John@office.com) is displayed. Furthermore, in a case of an object far from the electronic device (or a small-sized object on a screen) (e.g., a "Lynn" object) among the person objects, virtual information having only a high importance value corresponding to the object, namely, a name (e.g., Lynn) and a mobile number (e.g., 010-1234-0000) is displayed.

As illustrated in FIG. 5, the virtual information is displayed by discriminatively applying the display range of the virtual information according to a degree that the objects displayed on the screen are proximate to the electronic device or a degree of a size in which the objects are displayed on the screen, that is, according to an importance value of the objects. For example, in the example of FIG. 5, information belonging to categories having an importance value ranging from high to low is provided for the object (e.g., the "Jane" object) having a high importance value, information belonging to categories having high and medium importance values is provided for the object (e.g., the "John" object) having a medium importance value, and only information belonging to a category having a high importance value is provided for the object (e.g., the "Lynn" object) having a low importance value.

Here, it may be assumed in the example of FIG. 5 that virtual information is not displayed for an object 400 located in a rearmost position on the screen among the person objects in the reality image. For example, among the person objects, the object 400 located in the rearmost position on the screen may correspond to an object having the lowest importance value. In a case in which there are a number of objects configuring the reality image, the bubble windows 300 corresponding to the respective objects overlap each other so that the objects and the virtual information may not be intuitively displayed. Accordingly, in the embodiment of the present invention, the virtual information for some objects may not be adaptively displayed according to the importance value for the objects in the reality image. Namely, the displaying of the virtual information may be adaptively processed in correspondence to a component ratio of the objects displayed on the screen. Thus, if the screen is large enough in size and a user's visibility is not interrupted, the virtual information for the object 400 may also be provided, although the virtual information for the object 400 is not displayed in the example of FIG. 5.

It may be assumed in FIG. 6 that an attribute of virtual information corresponding to building objects is classified into a building name (e.g., a cathedral, a hotel, a landmark, and the like), an address, a distance from a current position, a phone number, a web page, and a review, which are based on attraction spot information (e.g., architectural information). Here, it may be assumed in FIG. 6 that among the aforementioned virtual information, the building name belongs to a category having a high importance value, the address and the distance belong to a category having a medium importance value, and the phone number, the web page and the review belong to a category having a low importance value.

For example, in a case of an object closest to the electronic device (an object most proximate to the electronic device or the largest object displayed on a screen) (e.g., a Russian cathedral object) among the building objects, virtual information having high, medium and low importance values corresponding to the object, namely, a building name (e.g., Russian cathedral), an address (e.g., 30 Rue des Beaux Arts 75006 Pairs, France), a distance (e.g., 50 m from here), a phone number (e.g., 01 44 47 9900), a web page (e.g., i-hotel.com), and a review (e.g., 1 review) is displayed. Further, in a case of an object located an average distance from the electronic device (an object usually proximate to the electronic device or a medium-sized object on a screen) (e.g., a Residence object) among the building objects, virtual information having high and medium importance values corresponding to the object, namely, a building name (e.g., Residence), an address (e.g., 30 Rue Joubert 75009 Paris, France), and a distance (e.g., 100 m from here) is displayed. Furthermore, in a case of an object far from the electronic device (or a small-sized object on a screen) (e.g., an Eiffel tower object) among the building objects, virtual information having only a high importance value corresponding to the object, namely, a building name (e.g., Eiffel tower) is displayed.

Further, as illustrated in FIG. 6, an image corresponding to the object may also be provided together with text-based virtual information displayed through a bubble window 300. Namely, according to the embodiment of the present invention, the virtual information may be provided in at least one form of a text and an image. Moreover, the image may also be differently displayed in size according to an importance value of the objects. For example, as illustrated in FIG. 6, a large-sized image is displayed for an object (e.g., the Russian cathedral object) determined to have a high importance value (or a high priority), a medium-sized image is displayed for an object (e.g., the Residence object) determined to have a medium importance value (or a medium priority), and a small-sized image is displayed for an object (e.g., the Eiffel tower object) determined to have a low importance value (or a low priority).

As illustrated in FIG. 6, the virtual information may be displayed by discriminatively applying the display range of the virtual information according to a degree that the objects displayed on the screen are proximate to the electronic device or a degree of a size in which the objects are displayed on the screen, that is, according to the importance value of the objects. For example, in the example of FIG. 6, information belonging to categories having an importance value ranging from high to low is provided for the object (e.g., the Russian cathedral object) having the high importance value, information belonging to categories having high and medium importance values is provided for the object (e.g., the Residence object) having the medium importance value, and only information belonging to a category having a high importance value is provided for the object (e.g., the Eiffel tower object) having the low importance value.

Here, in the example of FIG. 6, the virtual information may not be displayed for some objects in consideration of several items including the importance value of the objects in the reality image, the screen size, and an arrangement of the bubble window 300, as described above with reference to FIG. 5.

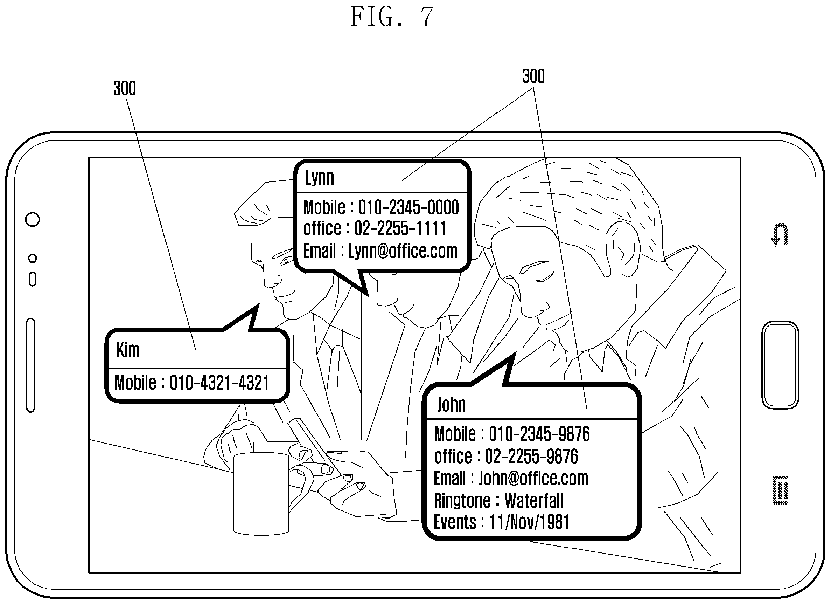

FIG. 7 illustrates an example of an operation in which objects of a reality image are processed at different levels in an electronic device according to an embodiment of the present invention.

Referring to FIG. 7, FIG. 7 is a view schematically illustrating a case in which objects of a reality image are changed as a user moves the electronic device in the same status as in FIG. 5.

As illustrated in FIG. 7, the user may move the electronic device to change the reality image (e.g., the objects) displayed on a screen in the same status as in FIG. 5. For example, as illustrated in FIG. 7, the user may move the electronic device leftwards (e.g., in a direction in which a "Jane" object is excluded from the screen). Comparing FIG. 5 with FIG. 7, the "John" object is changed to an object closest to the electronic device (an object most proximate to the electronic device or the largest object displayed on the screen), the "Lynn" object is changed to an object located an average distance from the electronic device (an object usually proximate to the electronic device or a medium-sized object displayed on a screen), and the "Kim" object is changed to an object far from the electronic device (a small-sized object displayed on the screen), on the screen of FIG. 7. When the reality image is changed as illustrated in FIG. 7 in the same status as in FIG. 5, the importance value for the objects in the reality image may be changed, and the importance value of the virtual information (i.e., the display range of the virtual information (or the amount of the information)) corresponding to the objects may also be accordingly changed and displayed.

For example, in the case of the "John" object changed to be closest to the electronic device, as the importance value thereof is changed from the medium status to the high status, the remaining information (e.g., information belonging to the category having the low importance value) is also included therein together with the virtual information displayed in FIG. 5 (e.g., the information belonging to the categories having the high and medium importance values). As an example, as illustrated in FIGS. 5 and 7, in the case of the "John" object, information such as a ring-tone (e.g., Waterfall) and Events (e.g., 11/NOV/1981) (information belonging to the category having the low importance value) is further included and displayed together with the information such as the name (e.g., John), the mobile number (e.g., 010-2345-9876), the office number (e.g., 02-2255-9876), and the e-mail address (e.g., John@office.com) (the information belonging to the categories having the high and medium importance values). Further, in the case of the "Lynn" object, information such as an office number (e.g., 02-2255-1111) and an e-mail address (e.g., Lynn@office.com) (the information belonging to the category having the medium importance value) is further included and displayed together with the information such as the name (e.g., Lynn) and the mobile number (e.g., 010-1234-000) (the information belonging to the category having the high importance value). Furthermore, in the case of the "Kim" object, information such as a name (e.g., Kim) and a mobile number (e.g., 010-2345-6789) (information belonging to the category having the high importance value) is added and displayed in the state in which no virtual information is displayed. As described above, according to the embodiment of the present invention, when the reality image displayed on the screen is changed or a preset reference for the importance value is reversed due to a predetermined input intended by a user, the displayed virtual information may be accordingly changed and displayed.

As described above through the examples illustrated in FIGS. 3A to 7, according to the various embodiments of the present invention, the importance value of the objects configuring the reality image may be determined, and the importance value of the virtual information (i.e., the display range of the virtual information) which will be overlapped and displayed on the corresponding object may be determined according to the importance value of the object. Namely, in the embodiments of the present invention, the virtual information corresponding to the corresponding object may be discriminatively configured and displayed in consideration of the importance value of the object and the importance value of the virtual information. Further, in the embodiments of the present invention, the objects in the reality image corresponding to the subject may be processed at the same level or at different levels in the way of displaying the virtual information.

In the embodiments of the present invention, in the case of processing the objects of the reality image at the same level, the display range of the virtual information (or the amount of the information) may be changed and displayed according to the number of objects, in which case the number of objects may be a variable and the display range of the virtual information (or the amount of the information) may be inversely proportional to the number of objects.

In the embodiments of the present invention, in the case of processing the objects of the reality image at different levels, the display range of the virtual information (or the amount of the information) may be changed and displayed according to the importance value for each of the objects, in which case the importance value of the objects may be a variable and the display range of the virtual information (or the amount of the information) may be proportional to the importance value of the objects.

In the embodiments of the present invention, the importance value of the objects may be classified into two, three, or more steps according to the corresponding augmented reality application and the user's setting, and the importance value of the virtual information may also be classified into a plurality of steps. Namely, in the various embodiments of the present invention, categories for classifying a specific reality image (object) and specific virtual information are not limited, and may be implemented by various methods capable of classifying and mapping a reality image and virtual information and maximizing visual efficiency at a time of transferring the virtual information.

Meanwhile, although not described in the examples referring to FIGS. 3A to 7, the virtual information overlapped and displayed on the reality image may be moved and displayed in response to a user's input according to an embodiment of the present invention. For example, describing an example of moving the virtual information displayed to correspond to the "Lynn" object in FIG. 7, a user may input a touch event (e.g., a touch and hold event) for selecting and holding the bubble window 300, providing the virtual information for the "Lynn" object, for a predetermined period of time. In addition, the user may input a touch event (e.g., a drag event or a movement event) for moving the bubble window 300 in a predetermined direction (e.g., from up to down on the screen). Then, the electronic device may move the corresponding bubble window 300 to a corresponding position and display the same at the position in response to the aforementioned user input. At this time, the electronic device may change the shape of the speech bubble of the corresponding bubble window 300 in response to the movement of the bubble window 300. This can prevent the object from being hidden by the bubble window 300 for the virtual information, thereby improving visibility and intuitiveness of the user.

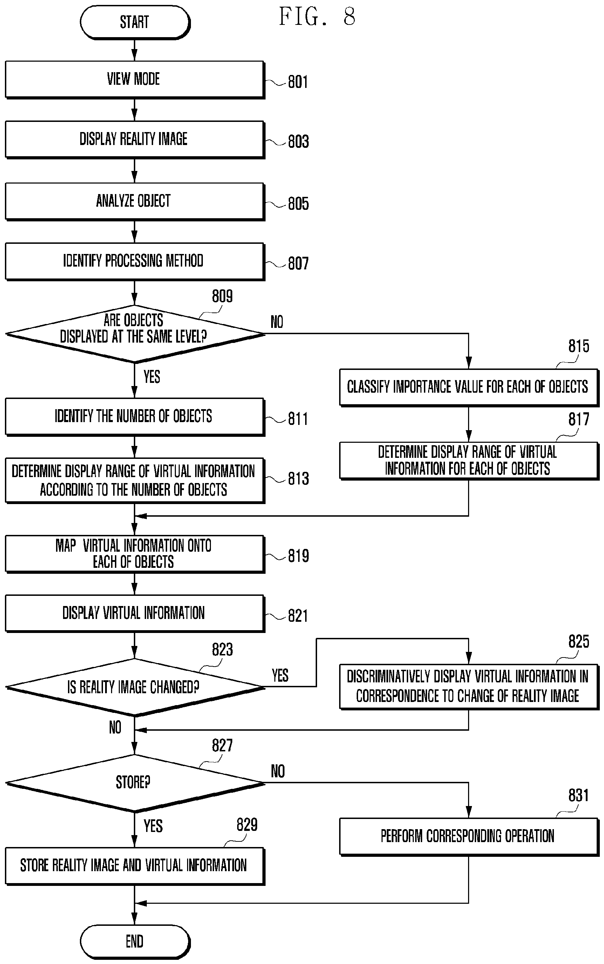

FIG. 8 is a flowchart illustrating a method of mapping and displaying virtual information on a reality image in an electronic device according to an embodiment of the present invention.

Referring to FIG. 8, a controller 180 executes a view mode in step 801, and controls displaying of a reality image according to the execution of the view mode in step 803. For example, the controller 180 may execute an augmented reality application or a camera application requested by a user, and accordingly drive the camera module 170. The controller 180 may control displaying of a screen on which a reality image corresponding to a subject of a real world acquired through the camera module 170 is provided as a preview in the view mode related to the executed application.

The controller 180 analyzes objects configuring the reality image at a time point of displaying the reality image in step 805. For example, the controller 180 may extract objects configuring the reality image, and analyze a classification (or an attribute) of the reality image based on the extracted objects. Further, the controller 180 may determine complexity (e.g., the number of objects, an importance value of objects, and the like) from the classification (or attribute) of the corresponding reality image.

The controller 180 identifies a processing method for displaying virtual information corresponding to the reality image, in step 807. The controller 180 may identify the set processing method with reference to setting information set in advance, and thus determines in step 809 whether the processing method corresponds to a method of displaying virtual information of the same level for each of the objects in the reality image or a method of displaying virtual information of a different level for each of the objects in the reality image.

When the processing method corresponds to the method of displaying the virtual information of the same level for each of the objects in step 809), the controller 180 identifies an importance value of the objects (e.g., the number of objects) contained in the reality image in step 811, and determines a display range of virtual information (or an amount of information) which will be displayed for each of the objects corresponding to the number of objects, in step 813. For example, the controller 180 may determine an importance value level of virtual information corresponding to the importance value of the objects (e.g., the number of objects) among preset importance value levels of the virtual information (e.g., high, medium, and low importance values). Examples of such an operation have been illustrated in FIGS. 3A to 3C or FIGS. 4A and 4B as described above.

When the processing method corresponds to the method of displaying the virtual information of the different level for each of the objects in step 809), the controller 180 classifies an importance value of the objects (e.g., a size of the objects, a distance between the electronic device and the objects, and time when the objects are displayed) contained in the reality image, in step 815, and determines a display range of virtual information (or an amount of information) which will be displayed for each of the objects corresponding to the importance value of the objects, in step 817. For example, the controller 180 may determine an importance value level of virtual information for each of the objects in correspondence to the importance value of the objects (e.g., the size of the objects, the distance between the electronic device and the objects, and the time when the objects are displayed) among preset importance value levels of the virtual information (e.g., high, medium, and low importance values). Examples of such an operation have been illustrated in FIGS. 5 to 7 as described above.

The controller 180 map the virtual information onto each of the objects in the reality image by using the display range of the virtual information (the amount of the information) determined as described above, in step 819, and controls the mapped virtual information for each of the objects to be overlapped and displayed on the objects, in step 821. Examples of such an operation have been illustrated in FIGS. 3A to 7 as described above.

In the state in which the virtual information is overlapped and displayed on the reality image as described above, the controller 180 determines whether there is a change of the reality image being currently displayed on the screen, in step 823. For example, the controller 180 may detect a change of objects corresponding to a reality image of a subject acquired through the camera module 170. The controller 180 may detect the change in units of frames of the reality image acquired through the camera module 170.

When the change of the reality image is determined in step 823, the controller 180 controls such that the virtual information is discriminatively displayed in response to the change of the reality image (i.e., the change of the objects), in step 825. For example, the controller 180 may change and display the virtual information for each of the objects according to the importance value of the objects changed to correspond to the change of the reality image. An example of such an operation has been illustrated in FIG. 7 as described above.

In the state in which the virtual information is overlapped and displayed on the reality image as described above, the controller 180 determines whether there is a request for storing the reality image and the virtual information which are being currently displayed on the screen, in step 827. For example, a user may input a command set for capturing a currently photographed reality image through the user input unit 120 or the touch screen 130 of the electronic device.

When the request for storing the reality image and the virtual information is made by the user in step step 827, the controller 180 combines the reality image being currently displayed on the screen and the virtual information mapped and displayed on the reality image and stores them, in step 829. For example, when the command set for storing the currently displayed reality image is input through the user input unit 120 or the touch screen 130, the controller 180 combines the currently displayed reality image and the virtual information overlapped and displayed on the reality image and stores them in response to the command.

When there is no request for storing the reality image and the virtual information from the user in step 827, the controller 180 controls a performance of the corresponding operation. For example, the controller 180 may terminate the view mode in response to a user's request for terminating the view mode. Further, in response to a user's input for moving a bubble window 300 of virtual information being overlapped and displayed on a specific object, the controller 180 may move the corresponding bubble window 300 to a corresponding area, and then may display the bubble window 300 in the corresponding area.

Meanwhile, the electronic device may not need to use the camera module 170 any more when the view mode is terminated. Thus, the electronic device may also deactivate the photography function through the camera module 170 when the view mode is terminated. For example, the camera module 170 may be turned off.

The aforementioned electronic device according to the various embodiments of the present invention may include all devices using an Application Processor (AP), a Graphic Processing unit (GPU), and a Central Processing Unit (CPU), such as all information communication devices, all multimedia devices, and all application devices thereof, which support the functions of the present invention. For example, the electronic device may include devices such as a tablet Personal Computer (PC), a smart phone, a Portable Multimedia Player (PMP), a media player (e.g., an MP3 player), a portable game terminal, and a Personal Digital Assistant (PDA) in addition to mobile communication terminals operating based on respective communication protocols corresponding to various communication systems. In addition, function control methods according to the various embodiments of the present invention may also be applied to various display devices such as a digital television, a Digital Signage (DS), and a Large Format Display (LFD), a laptop computer such as a notebook computer, and a Personal Computer (PC).

The various embodiments of the present invention may be implemented in a recording medium, which can be read through a computer or a similar device, by using software, hardware, or a combination thereof. According to the hardware implementation, the embodiments of the present invention may be implemented using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro-processors, and electrical units for performing other functions.

In some cases, the embodiments described in the present specification may be implemented by the controller 180 in itself. According to the software implementation, the embodiments such as procedures and functions described in the present specification may be implemented by separate software modules (e.g., the reality image display module 184, the information processing module 186, or the information display module 188). The software modules may perform one or more functions and operations described in the present specification.

Here, the recording medium may include a computer readable recording medium storing programs for performing the operation of displaying the reality image acquired in the view mode, the operation of determining the display range of the virtual information for each of the objects depending on the importance value of the objects according to the reality image, and the operation of mapping and displaying the virtual information on each of the objects.

According to various embodiments of the present invention, the respective modules may be configured with software, firmware, hardware, or combinations thereof. Further some or all modules may be configured within one entity, in which case the function of the corresponding module may be identically performed.

According to various embodiments of the present invention, respective operations may be executed sequentially, repeatedly, or in parallel. Further, some operations may be omitted, or other operations may be added and executed. According to an example, the respective operations may be executed by the corresponding modules described in the present invention.

Meanwhile, the various embodiments of the present invention as described above may be implemented in the form of a program instruction that can be performed through various computers, and may be recorded in a computer readable recording medium. The computer-readable recording medium may include a program instruction, a data file, a data structure, and the like individually or in combinations thereof. The program instruction recorded in the recording medium is specially designed and constructed for the present invention, but may be well known to and may be used by those skilled in the art of computer software.

The computer readable recording medium may include a magnetic medium such as a hard disc, a floppy disc, and a magnetic tape, an optical recording medium such as a Compact Disc Read Only Memory (CD-ROM) and a Digital Versatile Disc (DVD), a magneto-optical medium such as a floptical disk, and a hardware device specifically configured to store and execute program instructions, such as a Read Only Memory (ROM), a Random Access Memory (RAM), and a flash memory. In addition, the program instructions may include high class language codes, which can be executed in a computer by using an interpreter, as well as machine codes made by a compiler. The aforementioned hardware device may be configured to operate as one or more software modules in order to perform the operation of the present invention, and vice versa.

Certain embodiments of the present invention shown and described in this specification and the drawings correspond to specific examples presented in order to easily describe technical contents of the present invention and to help comprehension of the present invention, and are not intended to limit the scope of the present invention.

## Claims

1. A method of providing information in an augmented reality function of an electronic device, the method comprising:
displaying (203, 803) a reality image including at least one object acquired in a view mode;
analyzing (205, 805) an importance value of objects in the reality image;
determining a classification of the reality image based on the at least one object;
determining importance values of a plurality of pieces of virtual information according to the classification of the reality image, wherein the importance values of the plurality of pieces of virtual information include two or more levels;
determining (207, 817) an amount of virtual information for each of the objects based on the importance value of the objects;
mapping (819) the virtual information onto each of the objects based on the amount of virtual information of each of the objects and the importance values of the virtual information; and
displaying (209, 821) the mapped virtual information for each of the objects, wherein the amount of virtual information mapped to an object increases with an increased importance value of the object, and wherein the range of importance values of the virtual information mapped onto the object increases as the amount of virtual information mapped to the object increases.

2. The method of claim 1, wherein displaying the virtual information comprises:
overlapping and displaying virtual information for each of the objects.

3. The method of claim 1, wherein the importance value of the objects is determined by one of or a combination of at least two of the number of objects, a size of the objects, a distance between the electronic device and the objects, a time when the objects are provided, and a time when the objects are displayed.

4. The method of claim 1, wherein the importance value of the objects is arbitrarily changed and set by a user.

5. The method of claim 4, wherein the virtual information is changed and displayed according to the changed importance value of the objects when the importance value of the objects is changed by the user.

6. The method of claim 1, wherein displaying the virtual information comprises:
detecting (823) a change of the displayed reality image;
determining the importance value of the objects according to the change of the reality image; and
changing and displaying (825) the virtual information for each of the objects corresponding to the changed importance value of the objects.

7. The method of claim 1, further comprising:
combining and storing (829) the reality image and the virtual information overlapped and displayed on the objects in the reality image.

8. An electronic device for providing an augmented reality function, the electronic device comprising:
a camera module (170) configured to acquire a reality image of at least one object in a view mode;
a display unit (131) configured to display the reality image acquired through the camera module (170), and to display virtual information for objects in the reality image; and
a controller (180) configured to analyze an importance value of the objects in the reality image, determine a classification of the reality image based on the at least one object, to determine importance values of a plurality of pieces of virtual information based on the classification of the reality image, wherein the importance values of the plurality of pieces of virtual information include two or more levels, to determine an amount of the virtual information for each of the objects according to the importance value of the objects, to map the virtual information onto each of the objects based on the amount of virtual information of each of the objects and the importance values of the virtual information, and to control displaying of the mapped virtual information for each of the objects, wherein the amount of virtual information mapped to an object increases with an increased importance value of the object, and wherein the range of importance values of the virtual information mapped onto the object increases as the amount of virtual information mapped to the object increases.

9. A computer readable recording medium storing a program, which when executed by a computer, causes the computer to perform the method of any of claims 1 to 7.

## Patentansprüche

1. Ein Verfahren zur Bereitstellung von Informationen in einer erweiterten Realitätsfunktion einer elektronischen Vorrichtung, wobei das Verfahren Folgendes umfasst:
Anzeigen (203, 803) eines in einem Ansichtsmodus erfassten Realbildes einschließlich mindestens eines Objektes;
Analysieren (205, 805) eines Wichtigkeitswertes von Objekten in dem Realbild;
Ermitteln einer Klassifizierung des Realbildes basierend auf dem mindestens einen Objekt;
Ermitteln von Wichtigkeitswerten für eine Vielzahl von virtuellen Informationen entsprechend der Klassifizierung des Realbildes, wobei die Wichtigkeitswerte der Vielzahl von virtuellen Informationen mindestens zwei Ebenen umfassen;
Ermitteln (207, 817) einer Menge an virtuellen Informationen für jedes der Objekte basierend auf dem Wichtigkeitswert der Objekte;
Zuordnen (819) der virtuellen Informationen zu jedem der Objekte basierend auf der Menge an virtuellen Informationen eines jeden der Objekte und den Wichtigkeitswerten der virtuellen Informationen; und
Anzeigen (209, 821) der zugeordneten virtuellen Informationen für jedes der Objekte, wobei die Menge der einem Objekt zugeordneten virtuellen Informationen steigt, je höher der Wichtigkeitswert ist, und wobei der Bereich von Wichtigkeitswerten der dem Objekt zugeordneten virtuellen Informationen steigt, wenn die Menge der dem Objekt zugeordneten virtuellen Informationen steigt.

2. Das Verfahren nach Anspruch 1, wobei das Anzeigen der virtuellen Informationen Folgendes umfasst:
Überlappen und Anzeigen virtueller Informationen für jedes der Objekte.

3. Das Verfahren nach Anspruch 1, wobei der Wichtigkeitswert der Objekte durch ein oder eine Kombination aus mindestens zwei Elementen aus der Anzahl der Objekte, einer Größe der Objekte, einer Entfernung zwischen der elektronischen Vorrichtung und den Objekten, einer Zeit der Bereitstellung der Objekte und/oder einer Zeit, zu der die Objekte angezeigt werden, ermittelt wird.

4. Das Verfahren nach Anspruch 1, wobei der Wichtigkeitswert der Objekte beliebig durch einen Benutzer geändert und festgelegt wird.

5. Das Verfahren nach Anspruch 4, wobei die virtuellen Informationen entsprechend dem geänderten Wichtigkeitswert der Objekte geändert und angezeigt werden, wenn der Wichtigkeitswert der Objekte durch den Benutzer geändert wird.

6. Das Verfahren nach Anspruch 1, wobei das Anzeigen der virtuellen Informationen Folgendes umfasst:
Erkennen (823) einer Änderung des angezeigten Realbildes;
Ermitteln des Wichtigkeitswertes der Objekte entsprechend der Änderung des Realbildes; und
Ändern und Anzeigen (825) der virtuellen Informationen für jedes der Objekte entsprechend dem geänderten Wichtigkeitswert der Objekte.

7. Das Verfahren nach Anspruch 1, wobei dieses weiter Folgendes umfasst:
Zusammenführen und Speichern (829) des Realbildes und der virtuellen Informationen, die überlappt und auf den Objekten im Realbild angezeigt wurden.

8. Eine elektronische Vorrichtung zur Bereitstellung einer erweiterten Realitätsfunktion, wobei die elektronische Vorrichtung Folgendes umfasst:
ein Kameramodul (170), das eingerichtet ist, um ein Realbild von mindestens einem Objekt in einem Ansichtsmodus zu erfassen;
eine Anzeigeeinheit (131), die eingerichtet ist, um das über das Kameramodul (170) erfasste Realbild anzuzeigen und virtuelle Informationen zu Objekten in dem Realbild anzuzeigen; und
eine Steuereinheit (180), die eingerichtet ist, um einen Wichtigkeitswert der Objekte im Realbild zu analysieren, eine Klassifizierung des Realbildes basierend auf dem mindestens einen Objekt zu ermitteln, Wichtigkeitswerte einer Vielzahl virtueller Informationen basierend auf der Klassifizierung des Realbildes zu ermitteln, wobei die Wichtigkeitswerte der Vielzahl von virtuellen Informationen mindestens zwei Ebenen umfassen, eine Menge der virtuellen Informationen für jedes Objekt entsprechend dem Wichtigkeitswert der Objekte zu ermitteln, die virtuellen Informationen basierend auf der Menge an virtuellen Informationen eines jeden der Objekte und basierend auf den Wichtigkeitswerten der virtuellen Informationen jedem der Objekte zuzuordnen, und das Anzeigen der zugeordneten virtuellen Informationen für jedes Objekt zu steuern, wobei die Menge der einem Objekt zugeordneten virtuellen Informationen steigt, je höher der Wichtigkeitswert ist, und wobei der Bereich von Wichtigkeitswerten der dem Objekt zugeordneten virtuellen Informationen steigt, wenn die Menge der dem Objekt zugeordneten virtuellen Informationen steigt.

9. Ein computerlesbares Aufzeichnungsmedium, auf dem ein Programm gespeichert ist, das bei der Ausführung durch einen Computer auslöst, dass der Computer das Verfahren nach einem der Ansprüche 1 bis 7 durchführt.

## Revendications

1. Un procédé de fourniture d'informations dans une fonction de réalité augmentée d'un dispositif électronique, le procédé comprenant :
l'affichage (203, 803) d'une image de réalité comprenant au moins un objet acquis dans un mode de visualisation,
l'analyse (205, 805) d'une valeur d'importance d'objets dans l'image de réalité,
la détermination d'une classification de l'image de réalité en fonction du au moins un objet,
la détermination de valeurs d'importance d'une pluralité d'éléments d'informations virtuelles en fonction de la classification de l'image de réalité, où les valeurs d'importance de la pluralité d'éléments d'informations virtuelles comprennent deux ou plus niveaux,
la détermination (207, 817) d'une quantité d'informations virtuelles pour chacun des objets en fonction de la valeur d'importance des objets,
la mise en correspondance (819) des informations virtuelles avec chacun des objets en fonction de la quantité d'informations virtuelles de chacun des objets et des valeurs d'importance des informations virtuelles, et
l'affichage (209, 821) des informations virtuelles mises en correspondance pour chacun des objets, où la quantité d'informations virtuelles mises en correspondance avec un objet augmente selon une valeur d'importance accrue de l'objet, et où la plage de valeurs d'importance des informations virtuelles mises en correspondance avec l'objet augmente à mesure que la quantité d'informations virtuelles mises en correspondance avec l'objet augmente.

2. Le procédé selon la Revendication 1, où l'affichage des informations virtuelles comprend :
la superposition et l'affichage d'informations virtuelles pour chacun des objets.

3. Le procédé selon la Revendication 1, où la valeur d'importance des objets est déterminée par un élément ou une combinaison d'au moins deux éléments parmi le nombre d'objets, une taille des objets, une distance entre le dispositif électronique et les objets, un instant auquel les objets sont fournis et un instant auquel les objets sont affichés.

4. Le procédé selon la Revendication 1, où la valeur d'importance des objets est modifiée et définie de manière arbitraire par un utilisateur.

5. Le procédé selon la Revendication 4, où les informations virtuelles sont modifiées et affichées en fonction de la valeur d'importance modifiée des objets lorsque la valeur d'importance des objets est modifiée par l'utilisateur.

6. Le procédé selon la Revendication 1, où l'affichage des informations virtuelles comprend :
la détection (823) d'une modification de l'image de réalité affichée,
la détermination de la valeur d'importance des objets en fonction de la modification de l'image de réalité, et
la modification et l'affichage (825) des informations virtuelles pour chacun des objets correspondant à la valeur d'importance modifiée des objets.

7. Le procédé selon la Revendication 1, comprenant en outre :
la combinaison et la conservation en mémoire (829) de l'image de réalité et des informations virtuelles superposées et affichées sur les objets dans l'image de réalité.

8. Un dispositif électronique destiné à la fourniture d'une fonction de réalité augmentée, le dispositif électronique comprenant :
un module appareil de prise de vues (170) configuré de façon à acquérir une image de réalité d'au moins un objet dans un mode de visualisation,
une unité d'affichage (131) configurée de façon à afficher l'image de réalité acquise par l'intermédiaire du module appareil de prise de vues (170) et à afficher des informations virtuelles relatives à des objets dans l'image de réalité, et
un dispositif de commande (180) configuré de façon à analyser une valeur d'importance des objets dans l'image de réalité, à déterminer une classification de l'image de réalité en fonction du au moins un objet, à déterminer des valeurs d'importance d'une pluralité d'éléments d'informations virtuelles en fonction de la classification de l'image de réalité, où les valeurs d'importance de la pluralité d'éléments d'informations virtuelles comprennent deux ou plus niveaux, à déterminer une quantité des informations virtuelles relatives à chacun des objets en fonction de la valeur d'importance des objets, à mettre en correspondance les informations virtuelles avec chacun des objets en fonction de la quantité d'informations virtuelles de chacun des objets et des valeurs d'importance des informations virtuelles, et à commander l'affichage des informations virtuelles mises en correspondance pour chacun des objets, où la quantité d'informations virtuelles mises en correspondance avec un objet augmente avec une valeur d'importance accrue de l'objet, et où la plage de valeurs d'importance des informations virtuelles mises en correspondance avec l'objet augmente à mesure que la quantité d'informations virtuelles mises en correspondance avec l'objet augmente.

9. Un support d'enregistrement lisible par ordinateur conservant en mémoire un programme, qui, lorsqu'il est exécuté par un ordinateur, amène l'ordinateur à exécuter le procédé selon l'une quelconque des Revendications 1 à 7.
